Europäisches Patentamt

European Patent Office

Office européen des brevets

(19)

(11) Veröffentlichungsnummer: **0 457 052 A2**

(12) **EUROPÄISCHE PATENTANMELDUNG**

(21) Anmeldenummer: **91106297.4**

(22) Anmeldetag: **19.04.91**

(51) Int. Cl.5: **G02F  1/1337**

(30) Priorität: **17.05.90 DE 4015869**

(43) Veröffentlichungstag der Anmeldung:
**21.11.91 Patentblatt  91/47**

(84) Benannte Vertragsstaaten:
**DE FR GB IT NL**

(71) Anmelder: **Nokia Unterhaltungselektronik
(Deutschland) GmbH
Östliche Karl-Friedrich-Strasse 132
W-7530 Pforzheim(DE)**

(72) Erfinder: **Brosig, Stefan, Dr.
Teckstrasse 51 B
W-7000 Stuttgart 1(DE)**

(54) **Hochauflösende passiv angesteuerte Flüssigkristallanzeige.**

(57) Zur Verbesserung der Auflösung von passiv angesteuerten Flüssigkristallanzeigen wird erfindungsgemäß vorgeschlagen, daß zumindest die Orientierungssschicht (14.1;14.2) einer der beiden Substratplatten (3;4) der Flüssigkristallanzeige von einem
hochfluorierten, vorzugsweise perfluorierten aliphatischen Polymer, beispielsweise Teflon AF 1600 des
Herstellers Dupont gebildet ist.

Die Ausbildung der Orientierungsschicht in erfindungsgemäßer Weise erlaubt auch die Verwendung
von organischen Farbstoffen als Farbträgerschicht,
da die Orientierungsschicht in erfindungsgemäßer
Ausbildung lediglich Wärmebehandlungstemperaturen < 250 ° C erfordert. Die mittels der erfindungsgemäßen Orientierungsschicht erreichten Pretilts sind
mittels des angegebenen Herstellungsverfahren einstellbar und liegen im Bereich von 25 bis etwa 90 ° .

EP 0 457 052 A2

Rank Xerox (UK) Business Services

## Technisches Gebiet

Die Erfindung befaßt sich mit passiv angesteuerten Flüssigkristallanzeigen, deren auf den Substratplatten angeordnete Orientierungsschicht Flüssigkristallmolekülen einen hohen Pretilt vermittelt, sowie einem Verfahren zur Herstellung solcher Flüssigkristallanzeigen.

## Stand der Technik

Flüssigkristallanzeigen sind seit einiger Zeit im Stand der Technik bekannt. Ihnen ist gemein, daß sie aus zwei in einem vorbestimmten Abstand parallel zueinander verlaufenden und durchsichtigen Platten sowie einem die beiden Platten fest und unter Luftabschluß verbindenden Rahmen gebildet sind und daß der vom Rahmen und den beiden Platten gefüllte Raum mit Flüssigkristall gefüllt ist. Die Platten sind insbesondere dann, wenn es sich um hochwertige, fernsehtauglich Flüssigkristallanzeigen handelt, aus Glas gebildet. Die einander zugewandten Plattenflächen sind flächig mit einer Mehrzahl unterschiedlicher Materialien beschichtet.

So ist es bei monochromen Flüssigkristallanzeigen, deren beide einander zugewandten Plattenflächen die gleiche Beschichtungsfolge aufweisen, bekannt, die Plattenflächen zunächst mit einer transparenten und strukturierten Elektrodenanordnung, zum Beispiel in ITO-Ausbildung, zu versehen. Diese Elektrodenschicht ist mit einer Ausgleichs- und Isolierschicht zum Beispiel einer Siliziumdioxidschicht, abgedeckt. Auf die Ausgleichs- und Isolierschicht ist die sogenannten Orientierungsschicht aufgetragen. Diese Orientierungsschicht, welche direkt mit dem Flüssigkristall in Verbindung steht, ist herkömmlich aus Polyimid oder Polyphenylen gebildet. Zur Verbesserung der Ausrichtung der an der Orientierungsschicht anliegenden Flüssigkristallmoleküle kann die zum Flüssigkristall hinweisende Fläche der Orientierungsschicht mittels mechanischer Vorgänge orientiert sein.

Handelt es sich um farbwiedergabetaugliche Flüssigkristallanzeige, weist eine der beiden Substratplatten, vorzugsweise die Substratplatte, auf welcher die spätere Abbildung etwa des Fernsehbildes erfolgen soll, zwischen der dem Flüssigkristall zugewandten Fläche der Glasplatte und der Elektrodenschicht eine weitere Schicht auf. Diese Schicht, welche die organischen Farbmaterialien enthält, wird im folgenden als Farbträgerschicht bezeichnet.

Hochauflösende, passiv angesteuerte Flüssigkristallanzeigen, die einen weiten Blickwinkel bei hohem Kontrast haben und hochgemultiplext werden müssen, erfordern Orientierungsschichten, die den Flüssigkristallmolekülen einen hohen Anstellwinkel, Pretilt genannt, mitteilen.

Orientierungsschichten, die diese Eigenschaften aufweisen, lassen sich dadurch herstellen, daß Siliziummonoxid schräg auf die Substratplatte aufgedampft wird. Unter Anwendung dieser Technik lassen sich sehr hohe Pretilts einstellen. Nachteilig ist jedoch, daß dieses Verfahren sehr kostspielig ist und außerdem nur bei sehr kleinen Substratplatten eingesetzt werden kann. Sollen größere Substratplatten mit einem Pretilt bis etwa 25° erstellt werden, so ist es bekannt, hierzu eine organische Orientierungsschicht beispielsweise in Polyphenylenausbildung auf die Substratplatte aufzubringen. Da jedoch die Ausbildung einer Polyphenylenschicht als Orientierungsschicht auf einer Substratplatte Temperbedingungen von etwa 400°C erfordert und alle bekannten organischen Farbmaterialien, aus denen die jeweilige Farbträgerschicht gebildet sein kann, oberhalb von etwa 240°C bis 250°C ihre bis zu dieser Temperatur beständige Farbe ändern, wurden in der Folgezeit, da die Farbträgerschicht zwischen der Oberfläche der Glasplatte und der Elektrodenschicht angeordnet ist und somit zwangsläufig bei der Ausbildung der Orientierungsschicht ebenfalls auf etwa 400°C erwärmt wird, intensive Anstrengungen unternommen, die Tempertemperaturen auf einen Wert abzusenken, der für die Farbträgerschichten unschädlich ist. Diese Vorgabe wurde durch die Entwicklung von sogenannten Niedertemperaturpolyimiden und Niedertemperaturpolyphenylenen, die nur noch eine Tempertemperatur von etwa 160°C bis 260°C erfordern, erreicht. Wenngleich die unter Verwendung dieser Stoffe hergestellten Flüssigkristallanzeigen schon ein gutes Farbwiedergabeverhalten aufweisen, haben seitens der Anmelderin durchgeführte Untersuchungen dieser Zellen ergeben, daß die mittels des Niedertemperaturpolyimids bzw. -polyphenylens ausgebildete Orientierungsschichten lediglich Pretilts bis maximal 8° aufweisen. Versuche, eine farbträgerschichtfreie Substratplatte, die mit einer bei etwa 400°C getemperten Hochtilt-Orientierungsschicht versehen ist, mit einer farbträgerbeschichteten Substratplatte, die eine Orientierungsschicht in beispielsweise Niedertemperaturpolyimidausbildung aufweist, zu kombinieren, haben ergeben, daß der durch diese Maßnahme erreichte Gesamttilt zwischen den beiden Substratplatten über den jeweiligen Einzeltilt an der Orientierungsschicht in Niedertemperaturpolyimidausbildung ansteigt. Aber auch der Gesamttilt der so kombinierten Substratplatten, welcher keinen arithmetischen Mittelwert der Einzeltilts einnimmt, sondern lediglich dem Einzeltilt derjenigen Orientierungsschicht angenähert ist, die höhere Kopplungsenergie aufweist, ist noch nicht für hochauflösende Flüssigkristallanzeigen ausreichend. Daher liegt der Erfindung die Aufgabe zugrunde, eine Flüssigkristallanzeige, insbesondere eine Orientierungsschicht anzugeben, die einfach herzustellen ist und den Flüssigkristallmolekülen einen hohen Pretilt mitteilt, sowie ein Herstellungsverfahren für eine Orientierungsschicht anzugeben, welches einen hohen Pretilt gewährleistet.

Darstellung der Erfindung

Diese Aufgabe wird vorrichtungsmäßig dadurch gelöst, daß die Orientierungsschicht zumindest einer der beiden Substratplatten von einem hochfluorierten, vorzugsweise perfluorierten Polymer gebildet ist.

Die erfindungsgemäße Ausbildung der Orientierungsschichten von Substratplatten ist auch deshalb besonders vorteilhaft, weil sich nach der Erfindung gezeigt hat, daß mittels dieser Maßnahme der Schwärzungsgrad der Flüssigkristallanzeige ingeschaltetem Zustand erheblich verbessert wird. Außerdem hat sich nach der Erfindung gezeigt, wenn eine Substratplatte, die beispielsweise eine bei etwa 400°C getemperte Polyphenylenschicht als Orientierungsschicht aufweist, mit einer Substratplatte, die erfindungsgemäß ausgebildet ist, kombiniert wird, daß die Größe des Gesamttilts zwischen den beiden Substratplatten maßgeblich vom Einzeltilt der herkömmlich ausgebildeten Substratplatte bestimmt wird. Dies gilt unabhängig davon, ob der Einzeltilt der herkömmlich ausgebildeten Substratplatte größer oder kleiner ist als der Einzeltilt der erfindungsgemäß ausgebildeten Substratplatte.

Dies ist deshalb besonders vorteilhaft, weil durch die Kombination von herkömmlich ausgebildeter und erfindungsgemäß ausgebildeter Substratplatte in einer Flüssigkristallanzeige nahezu jeder Gesamttilt präzise eingestellt werden kann.

Diese Eigenschaft des hochfluorierten aliphatischen Polymeres ist nach Erkenntnissen der Anmelderin darauf zurückzuführen, daß dieses Material sich durch eine extrem niedrige Oberflächenenergie auszeichnet. Außerdem steht die niedrige Oberflächenenergie dieses Werkstoffes auch in direktem Zusammenhang zum verbesserten Schwärzungsgrad einer Flüssigkristallanzeige mit erfindungsgemäß ausgebildeter Orientierungschicht, da durch die geringe Kopplung zur Oberfläche schon ein schwaches Feld eine vollkommen homöotope Orientierung liefert.

In Anspruch 4 ist ein Herstellungsverfahren für eine Orientierungsschicht in hochfluorierten aliphatischer Polymerausbildung angegeben. Die besondere Bezugnahme auf den Werkstoff Teflon AF 1600 ist nur beispielhaft. Insbesondere kann dieses Verfahren bei jedem löslichen, hochfluorierten aliphatischen Polymer angewendet werden.

Vorteilhafte Aus- und Weiterbildungen der Erfindung sind in den Unteransprüchen 2 und 3 sowie 5 bis 7 dargestellt. Wird nach Unteranspruch 2 als hochfluoriertes aliphatisches Polymer Teflon AF 1600 der Firma Dupont eingesetzt, so hat dies den Vorteil, daß dieses Material nur Wärmebehandlungstemperaturen bis etwa 250°C erfordert, gleichwohl aber Anstellwinkel der Flüssigkristallmoleküle zur Oberfläche dieser Orientierungsschicht von > 25° gewährleistet.

Ist, wie in Unteranspruch 3 angegeben, eine der beiden Substratplatten der Flüssigkristallanzeige zusätzlich mit einer Farbträgerschicht ausgestattet und ist diese - farbträgerbeschichtete - Substratplatte mit einer Orientierungsschicht in erfindungsgemäßer Ausbildung versehen, hat dies den Vorteil, daß neben dem hohen Pretilt an dieser Orientierungsschicht auch bekannte organische Farbstoffe zur Bildung der Farbträgerschicht verwendbar sind. Dies ist darauf zurückzuführen, daß das hochfluorierte aliphatische Polymer zur Ausbildung einer Orientierungsschicht je nach Beschaffenheit auch schon mit Wärmebehandlungstemperaturen auskommt, die unterhalb 260°C liegen.

Die in den Unteransprüchen 5 bis 7 angegebenen Maßnahmen sind solche, die während des Herstellungsverfahrens einer erfindungsgemäß ausgebildeten Orientierungsschicht die Größe des Pretilts maßgeblich beeinflussen. Hervorzuheben ist in diesem Zusammenhang jedoch nur Unteranspruch 7. Wird danach die auf die Substratplatte aufgebrachte Lösung nach dem Durchtrocknen zur Herstellung einer erfindungsgemäßen Orientierungsschicht der notwendigen Wärmebehandlung unterzogen, so kann mittels der auf die Substratplatte einwirkenden Wärmebehandlungstemperaturen der Pretilt der Orientierungsschicht sehr genau eingestellt werden. Temperaturen nahe der 250°C-Marke bewirken vergleichsweise kleine Pretilts, während tiefere Temperaturen Pretilts bis zu 90° erzeugen.

Die Erfindung wird nun anhand einer Figur näher erläutert. Diese Figur zeigt eine Schnittdarstellung durch eine Flüssigkristallanzeige in Seitenansicht.

Wege zum Ausführen der Erfindung

Der Raum 1, welcher mit Flüssigkristall 2 gefüllt ist, wird durch eine erste Substratplatte 3 und eine zweite Substratplatte 4 sowie einen Rahmen 5 gebildet, in dem die Substratplatten 3, 4 und der Rahmen 5 fest und unter Luftabschluß miteinander verklebt sind.

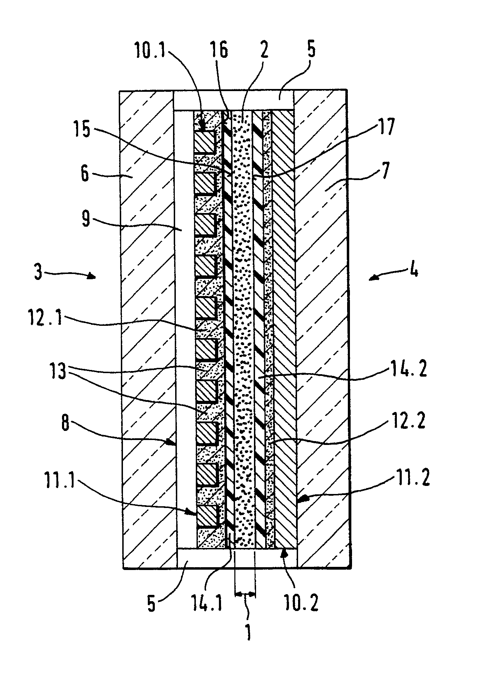

Diese Substratplatten 3,4, welche parallel und in einem vorgegebenen Abstand zueinander verlaufen, weisen jeweils eine Glasplatte 6,7 als Grundplatte auf, an die jeweils eine Mehrzahl von flächig aufliegenden und zum Flüssigkristall 2 hinweisenden Schichten anschließen. Die direkt auf der Fläche 8 der Glasplatte 6 aufliegende Schicht ist die sogenannten Farbträgerschicht 9. An diese Schicht schließt unmittelbar die Elektrodenschicht 10.1 an, während die Elektrodenschicht 10.2 der Substratplatte 4 direkt auf der Glasplatte 7 aufliegt. Vorliegend sind die beiden Elektrodenschichten 10.1, 10.2 als strukturierte ITO-Schichten ausgebildet und weisen jeweils eine Vielzahl voneinander getrennter Leiterbahnen 11.1, 11.2 auf. Die Leiterbahnen 11.1, 11.2 der Elektrodenschichten 10.1, 10.2 verlaufen zueinander um 90° verdreht, und zwar dergestalt, daß die Leiterbahnen 11.1 der Elektrodenschicht 10.1 längs und die Leiterbahnen 11.2 der Elektrodenschicht 10.2 vertikal zur Blickrichtung auf die Figur verlaufen.

Die Elektrodenschichten 10.1, 10.2 sind auf ihren einander zugewandten Flächen jeweils mit einer Ausgleichs- und Isolierschicht 12.1, 12.2 abgedeckt, wobei diese Schicht, wie insbesondere an der Substratplatte 3 veranschaulicht, auch die Zwischenräume 13 zwischen den Leiterbahnen 11.1 und 11.2 (dort allerdings aus darstellungstechnischen Gründen nicht sichtbar) ausgleicht. Die Ausgleichs- und Isolierschicht 12.1, 12.2 ist vorliegend eine Siliziumdioxidschicht.

An die Ausgleichs- und Isolierschicht 12.2 der Substratplatte 4 schließt die Orientierungsschicht 14.2 in herkömmlich bekannter Polyphenylenausbildung an. Der Pretilt, welcher zwischen der Fläche 17 der Orientierungsschicht 14.2 und dem Flüssigkristall 2 gebildet wird, beträgt etwa 20°.

In einem anderen - nicht dargestellten - jedoch dem hier erörterten Ausführungsbeispiel ähnlichen Ausführungsbeispiel kann die Orientierungsschicht 14.2 der farbträgerschichtfreien Substratplatte 4 auch aus einem hochfluorierten aliphatischen Polymer gebildet sein. Auf die besonderen Eigenschaften dieses Werkstoffs als Werkstoff für die Orientierungsschichten von Flüssigkristallzellen wird nachfolgend noch näher eingegangen.

Die Ausgleichs- und Isolierschicht 12.1 der mit der Farbträgerschicht 9 versehenen Substratplatte 3 ist gleichfalls mit einer Orientierungsschicht 14.1 abgedeckt. Der Werkstoff, aus welchem diese Orientierungsschicht 14.1 gebildet ist, ist ein hochfluoriertes aliphatisches Polymeres und kann unter der Herstellerbezeichnung Teflon AF 1600 von der Firma Dupont bezogen werden. Dieser durchsichtige Werkstoff hat nach Herstellerangaben eine Glasübergangstemperatur von 140° C bis 160° C sowie eine Anschmelztemperatur von 240° C bis 275° C.

In dem hier beschriebenen Ausführungsbeispiel wurde zur Herstellung der Orientierungsschicht 14.1 das Teflon AF 1600 zunächst in perfluoriertem Fluorkohlenwasserstoff gelöst. Dabei sollte der Anteil des Teflon AF 1600 in der Lösung aus Gründen der Viskosität fünf Prozent nicht überschreiten. Anschließend wurde die Lösung auf die Oberfläche 16 der Ausgleichs- und Isolierschicht 12.1 flächig aufgebracht und nach einer Einwirkzeit von 30 Sekunden auf der Oberfläche 16 30 Sekunden lang bei 1000 Umdrehungen pro Minute abgeschleudert. Nach Durchtrocknung der Orientierungsschicht 14.1 wurde diese sodann bei 250° C und 30 Minuten wärmebehandelt. Der Pretilt dieser so hergestellten Orientierungsschicht 14.1 beträgt im Übergangsbereich von der Fläche 15 der Orientierungsschicht 14.1 zum Flüssigkristall 2 etwa 35°, während bedingt durch die geringe Oberflächenenergie der Orientierungsschicht 14.1 der zwischen den Orientierungsschichten 14.1 und 14.2 vorherrschende Gesamttilt nahezu 25° beträgt.

Es wird darauf hingewiesen, daß der Pretilt einer jeden Orientierungsschicht in hochfluorierter aliphatischer Polymerausbildung (hier nur der Orientierungsschicht 14.1) von der Konzentration des hochfluorierten aliphatischen Polymeres und vom Lösungsmittel abhängig ist. Die zuvor angegebenen Werte beruhen auf einer 1%-igen Lösung von Teflon AF 1600 in einem Lösungsmittel der Firma 3M mit der Bezeichnung Fluorinert FC 77.

Die Orientierungsschichten 14.1 und 14.2 sind an ihren zum Flüssigkristall 2 hinweisenden Flächen 15, 16 mittels herkömmlich bekannter Verfahren orientiert.

Ferner wird darauf hingewiesen, daß die Orientierungsschichten in hochfluorierter aliphatischer Polymerausbildung nicht auf farbwiedergabetaugliche Flüssigkristallanzeigen beschränkt ist. Sollen monochrome Flüssigkristallanzeigen mittels der erfindungsgemäßen Orientierungsschicht ausgestattet werden, kann es zur Ausbildung eines genügend großen Gesamttilts zwischen den Substratplatten genügen, auch hier nur eine der beiden Substratplatten mit einer Orientierungsschicht in hochfluorierter aliphatischer Polymerausbildung auszubilden.

**Patentansprüche**

1. Hochauflösende, passiv angesteuerte Flüssigkristallanzeige
    - mit einer ersten Substratplatte (3), die aus Glas gebildet ist und einseitig mit einer transparenten und strukturierten Elektrode (10.1), einer Ausgleichs- und Isolierschicht (12.1) und einer mechanisch orientierten Orientierungsschicht (14.1) flächig beschichtet ist,
    - mit einer zweiten Substratplatte (4), die ebenfalls aus Glas gebildet ist und einseitig mit einer transparenten und strukturierten Elektrode (10.2), einer Ausgleichs- und Isolierschicht (12.2) sowie einer mechanisch orientierten Orientierungsschicht (14.2) flächig beschichtet ist,
- mit einem Rahmen (5), der die beiden Substratplatten (3,4) an ihren beschichteten Flächen miteinander unter Luftabschluß verbindet, und
- mit Flüssigkristall (2), der in dem vom Rahmen (5) und den beiden Substratplatten (3,4) gebildeten Raum (1) eingefüllt ist

**dadurch gekennzeichnet,**

daß die Orientierungsschicht (14.1, 14.2) zumindest einer der beiden Substratplatten (3,4) aus einem transparenten, hochfluorierten, vorzugsweise perfluorierten aliphatischen Polymer gebildet ist.

2. Flüssigkristallanzeige nach Anspruch 1,

**dadurch gekennzeichnet,**

daß das hochfluorierte aliphatische Polymer ein von der Firma Dupont beziehbarer und unter der Herstellerbezeichnung Teflon AF 1600 geführter Werkstoff ist.

3. Flüssigkristallanzeige nach Anspruch 1 und Anspruch 2,

**dadurch gekennzeichnet,**

- daß eine der beiden Substratplatten (3;4), vorzugsweise diejenige Substratplatte (3), auf der beispielsweise ein Fernsehbild abgebildet wird, zwischen der Fläche (8) der Glasplatte (6) und der Elektrodenschicht (10.1) eine aus organischen Materialien gebildete Farbträgerschicht (9) aufweist und
- daß diejenige Substratplatte (3), welche mit der Farbträgerschicht (9) ausgestattet ist, in jedem Fall die Substratplatte ist, deren Orientierungsschicht (14.1) von einem hochfluorierten aliphatischen Polymer gebildet ist.

4. Substratplatte (3) einer Flüssigkristallanzeige, deren Orientierungsschicht (14.1) von einem hochfluorierten, vorzugsweise perfluorierten aliphatischen Polymer - insbesondere einem solchen nach Anspruch 2 - gebildet ist,

**dadurch gekennzeichnet,**

daß diese Orientierungsschicht (14.1) mittels Ablauf folgender - in ihrer zeitlichen Reihenfolge angegebenen - Schritte auf die Substratplatte (3) aufgebracht wird:

1. Schritt:
Lösen des Teflon-AF 1600 in einem perfluorierten Fluorkohlenwasserstoff;
2. Schritt:
Flächiges Aufbringen der Lösung auf die zu beschichtende Oberfläche (16) der Substratplatte (3);
3. Schritt:
Einwirkenlassen der Lösung auf der Oberfläche (16);
4. Schritt:
Abschleudern der Lösung von der Oberfläche (16);
5. Schritt:
Trocknen der auf der Oberfläche (16) verbleibenden Schicht;
6. Schritt:
Wärmebehandeln der Substratplatte (3);
7. Schritt:
Orientieren der wärmebehandelten Orientierungsschicht.

5. Verfahren nach Anspruch 4,

**dadurch gekennzeichnet,**

daß die Lösung des hochfluorierten aliphatischen Polymeres, insbesondere des Teflon AF 1600 im Lösungsmittel < 5%, vorzugsweise 1% beträgt.

6. Verfahren nach Anspruch 4 und 5,

**dadurch gekennzeichnet,**

daß das Lösungsmittel Fluorinert FC 77 des Herstellers 3M ist.

7. Verfahren nach einem der Ansprüche 4 bis 6,

**dadurch gekennzeichnet,**

daß die Wärmebehandlung in einem Temperaturbereich kleiner/gleich 270°C ausgeführt wird.